(19)

Europäisches
Patentamt
European
Patent Office
Office européen
des brevets

(11) **EP 2 348 606 A2**

(12) **EUROPEAN PATENT APPLICATION**

(43) Date of publication:
27.07.2011 Bulletin 2011/30

(51) Int Cl.:
*H02J 7/34* (2006.01)          *H02J 17/00* (2006.01)
*H01L 41/113* (2006.01)

(21) Application number: 11250023.6

(22) Date of filing: 11.01.2011

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.01.2010 GB 1000346**

(71) Applicant: **Jogia, Paresh
Houghton Regis
Bedfordshire LU5 5RJ (GB)**

(72) Inventor: **Jogia, Paresh
Houghton Regis
Bedfordshire LU5 5RJ (GB)**

(74) Representative: **Whitaker, Iain Mark
Alban Patent Agency
The Old Pump House
1a Stonecross
St. Albans
Hertfordshire AL1 4AA (GB)**

(54) **Portable energy harvester**

(57)      The present invention provides, inter alia, a portable energy harvesting system with an output to charge or provide direct operating power to an external portable appliance such as, for example, a mobile phone or an MP3 player. This system may comprise one or more micro-generators, a power processing means and an electrical energy storage means. A voltage regulator may be connected to the energy harvesting system to provide a stable 5 Volts direct current (DC) output and the output port may thus comprise a USB type A port connected to the output of the voltage regulator. The energy harvesting system itself has a number of unique features and is highly sensitive and efficient. It may in some applications be incorporated inside the housing of portable electrical devices such as mobile phones and MP3 players or even housed inside a pair of headphones or in or on an armband or other item adapted to be worn by a user and may be used to directly power or charge the batteries within the MP3 player or mobile phone or other USB powered portable device.

Fig.1

**EP 2 348 606 A2**

Description

<u>Field of the Invention</u>

The present invention concerns improvements in and relating to chargers and portable energy harvesting systems and further concerns improvements to the existing storage systems in them and how they operate.

<u>Background to the Invention</u>

Modern portable electronic appliances such as mobile phones and MP3 players will drain their batteries within a very few hours usage and be unusable on longer journeys unless spare batteries are carried or a power source such as a mains charger is available to recharge them.
In recent times proposals have been made to use kinetic energy harvesting by electromagnetic induction within MP3 players or linked chargers to power them but these have not been successfully commercialized.
PCT/WO2008/109153 proposes a separate charger device which has an electro-magnetic induction micro-generator where the magnet of the micro-generator moves within a coil. However, the device is bulky, needs to be held vertically requiring use of a back-pack or similar to carry it and requires considerable human movement, such as walking for an hour or running, to provide a steady supply for any connected appliance and is only effective to deliver energy while the user is moving.
GB 2447086 also proposes an electro-magnetic induction micro-generator wherein the magnet moves within the coil and the device is strapped to the user's leg. This has most of the afore-mentioned drawbacks and is also stated to deliver a 12 Volt current to power an MP3 player or IPod but which is incompatible with commercially available mobile phones and MP3 players, which invariably require a 5 Volt DC source. USB devices do not generally operate at 12 Volts DC and also cannot be trickle charged.
By the term micro-generator we are generally referring to a compact (eg pocket-sized or smaller), lightweight (suitably well under 500g and normally 100g or lighter) portable generator. For most uses it is for generating electricity of the order of 100mW or mostly 1W or less and under 100W.
The existing proposals for energy harvesting systems to power coupled appliances such as mobile phones and MP3 players are woefully inadequate. The devices are inconvenient to carry and need a considerable amount of user movement/work to generate the power to drive the MP3 player or mobile phone and the energy harvesting systems lack the ability to deliver the required level and quality of supply and to deliver it in a suitable way and rely on continuous user motion to maintain supply.
It is a general objective of the present invention to provide a system that mitigates against the afore-mentioned problems of the prior art, enabling devices such as MP3 players and mobile phones to be efficiently powered and operated for long periods whether the user is continuously or only intermittently active and without need to replace batteries or re-charge them from mains.

<u>Summary of the Invention</u>

According to a first aspect of the present invention there is provided a portable energy harvesting device to harness ambient energy such as, for example, heat or sunlight, RF or kinetic energy from movement of the carrier and to convert it to electrical energy to charge or directly power a portable electrical appliance wherein the device has a micro-generator and comprises a super-capacitor as a long term electrical energy storage means and a power processing circuit comprising one or more Zero threshold voltage transistors to remove dependence on minimum supply voltage for electrical circuit operation.
Particularly preferably the device stores electrical energy long-term while charging or directly powering a portable electrical appliance, the device having a processor or decision making circuit that determines, directly or indirectly, if there is available energy for the micro-generator to capture and, if not (such as loss of solar energy at nightfall or absence of motion for a kinetic energy harvesting device), selects the long-term stored electrical energy to charge or directly power the external electrical appliance.
Preferably the portable energy harvester has a USB port as a power outlet to supply power to an external electrical appliance.
Preferably the device has a charger circuit that comprises an oscillator and a resonance frequency-tuned transformer thereby efficiently and effectively providing a good, stable voltage output at the required level. Preferably the oscillator is a digital watch crystal..
Voltage rectification circuits are advantageously provided to allow either an AC (Alternating Current) such as a kinetic energy capturing micro-generator using electromagnetic induction or a DC (Direct Current) source such as a solar panel for sunlight or a thermoelectric generator for heat. Voltage multiplication and charger circuits are advantageously provided in the device together with a voltage regulation section to provide a substantially constant 5 Volts, 0.1 Amps output current 5 as required for a USB connected device.

The energy collected in the long-term storage means/ super-capacitor is used as a fall-back source of power for the connected USB device for when there is no energy available for capture such as when it is nightfall when using a solar cell for example. Advantageously a decision-making circuit is provided in the energy harvesting device to directly or indirectly sense when there is available energy from the micro-generator and switch the output from the device to draw from the long-term storage means/ super-capacitor to provide power to the USB device until there is sufficient fresh supply generated from the micro-generator.

The portable energy harvesting device preferably comprises: a micro-generator; a power processing system; a short term energy storage means; and a long-term energy storage means, wherein the power processing system comprises a first charger to charge the short term energy storage means and a second charger to charge the long-term energy storage means and a comparator or decision making circuit that compares the output of the short term energy storage means with the output of the long-term energy storage means. The device suitably further comprises a third charger linked to the output of the short term energy storage means and/ or long-term energy storage means to boost the output thereof. The third charger provides a useful buffer and is particularly useful linked to the long-term energy storage means / supercapacitor to boost the output power voltage therefrom to suitable operational levels.

While in the first aspect the present invention has been described in terms of a portable energy harvester to power or charge an external portable electronic device, the inventive improvements in the energy harvesting and management technology therein are applicable to other instruments, devices, processes and structures in which electrical power is required. As a non-exhaustive list of examples, the technology can be used in appliances such as remote controllers, mobile phones, MP3 players, games controllers such as Nintendo Wii(R), laptops, netbooks, PDAs, digital cameras, portable musical instruments containing electronic circuits such as keyboards and electric guitars, or wireless portable devices such as Bluetooth(R) headphones, microphones and mice.

Notably, the technology can be used to altogether remove reliance on having any battery to power the appliances. Instead the appliances may rely primarily or solely on the super-capacitor as the power storage means, being kept charged by the energy converted by the micro-generator (e.g. light via a solar panel, heat via a thermoelectric generator or kinetic energy via electromagnetic induction).

## Brief description of the drawings

Preferred embodiments of the present invention will now be described in greater detail, by way of example only and with reference to the following drawings, wherein:

**Figure 1** is a simplified system overview of the energy harvesting system;

**Figures 2a-2d** show typical energy harvesting micro-generators (but unexhaustive). **Figure 2a** being a kinetic energy micro-generator using electromagnetic induction (AC source), **Figure 2b** being a piezo-electric element for a vibrational energy source, **Figure 2c** being a solar cell (DC micro-generator) and **Figure 2d** being a Thermo Electric Generator (DC micro-generator)

**Figures 3** is a top level system schematic;

**Figure 4** is a flow chart;

**Figure 5** is an electrical circuit diagram representation of an N-Channel MOSFET configured as a diode;

**Figure 6** is an electrical circuit diagram representation of multiple Zero Threshold Voltage N-Channel MOSFETS packaged in quad and dual configurations;

**Figure 7** is an electrical circuit diagram representation of the Voltage Multiplier using N-Channel MOSFET diodes;

**Figure 8** is an electrical circuit diagram representation of a NOR gate as use in the preferred embodiment;

**Figure 9** is an electrical circuit diagram representation of a super-capacitor as used for long term storage of the electrical energy;

**Figure 10** is an electrical circuit diagram representation of a standard capacitor as used for short term storage of the electrical energy;

**Figure 11** is an electrical circuit diagram representation of an N-channel MOSFET switch;

**Figure 12** is an electrical circuit diagram representation of the Voltage Comparator;

**Figure 13** is an electrical circuit diagram representation of the Voltage Regulator;

**Figure 14** is an electrical circuit diagram representation of a Charger unit of the system;

**Figure 15** is an electrical circuit diagram representation of a pair of kinetic energy micro-generators for harvesting kinetic energy from motion in different axes; and

**Figures 16a-c** show the physical arrangement of the Figure 15 micro-generator which is configured to harvest kinetic energy by electromagnetic induction, having a static magnet and moving coil, **Figure 16a** being a cross-sectional view of the micro-generator from one side, **Figure 16b** being a cross-sectional view of the micro-generator from one end and

**Figure 16c** being a cross-sectional view of the micro-generator from a front face;

## Detailed description of the preferred embodiments

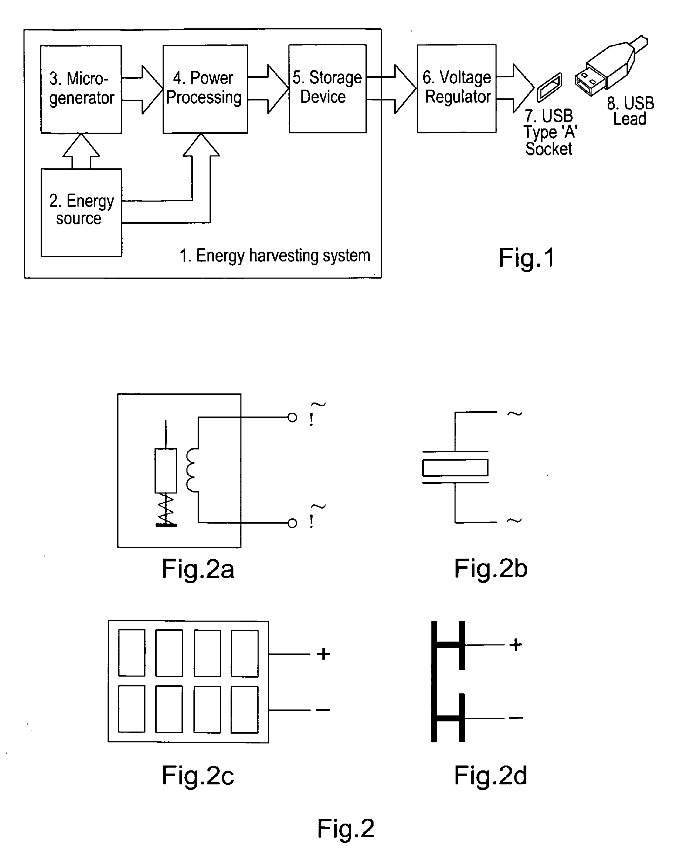

Referring to Figure 1, this shows a simplified representation of the Energy Harvesting system 1 of the invention. The system 1 is configured to harvest ambient energy and convert it to electrical energy and to boost the voltage of the electrical energy and give steady continuous power.

The first part of the system comprises at least one micro-generator as illustrated, a pair of micro-generator 3, providing means of converting an external energy source 2, such as heat, solar energy, kinetic or radio frequency energy (RF) into electrical energy. The electrical energy may be converted to DC (Direct Current) from AC (Analogue Current) via a power processing circuit 4 and boosted to the desired DC voltage. This is then stored in an electrical storage device such as a capacitor. For most applications the voltage will be regulated to provide a constant DC voltage. For a USB-coupled appliance such as, for example, a MP3 player, the USB standard requires that a constant 5 Volt DC with 100mA is supplied to operate the appliance or to charge the battery within the appliance. For this the system comprises a voltage regulator 6 and this is terminated to a USB socket 7 to provide the 5 Volts DC at 0.1 Amps.

To meet its objectives the energy harvesting system 1 addresses several challenges. Unless the power supply meets exacting criteria any USB appliance connected to the system 1 via the USB lead 8 will not acknowledge it as a USB power source and hence will fail to let it power the appliance or charge the battery within it. To this end the invention provides several innovative means to meet the requirements for an effective and efficient USB powering or charging device using an energy harvesting system. In the preferred embodiments these variously include: use of a decision making circuit; 2) use of a digital watch crystal; 3) use of a super-capacitor; 4) use of Zero threshold voltage MOSFETs and 5) use of a resonant frequency tuned transformer with a High Permeability Core soft magnetic material.

## Decision Making Circuit

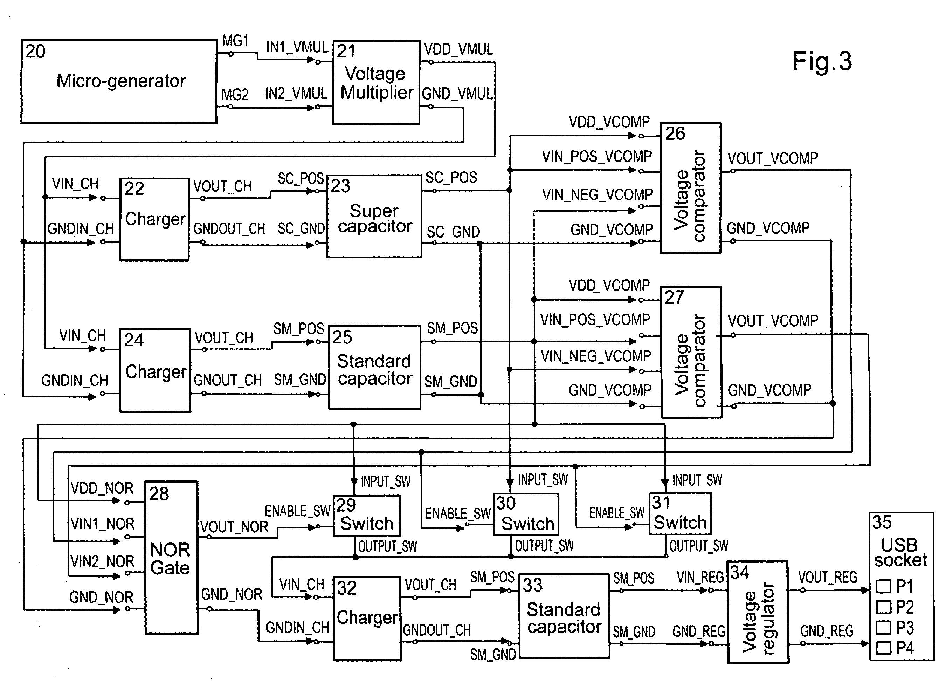

The portable energy harvesting system 1 of the preferred embodiment of the present invention utilises a decision making circuit 43 (see Figure 3b). This determines if there is a continuous flow of energy available from the micro-generator and will make a decision to use the energy stored in the long term energy storage device 42 if not. This way, the user does not need to be in continuous movement (for a kinetic energy source), or be in constant sunlight (from a solar cell) or in continuous source of heat (from a Thermal Energy Generator).

## Digital watch crystal

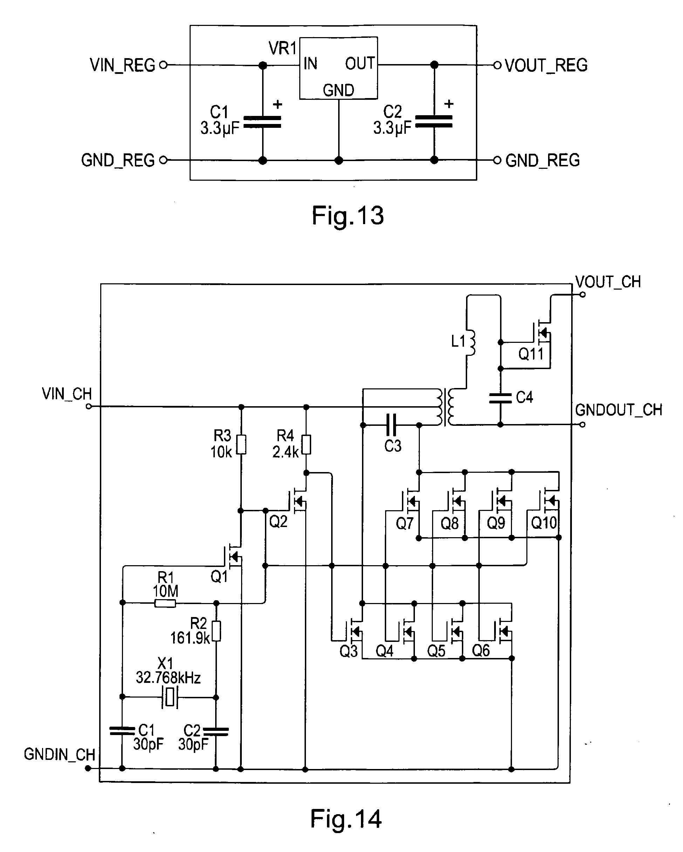

The energy harvesting system 1 of the preferred embodiment of the present invention utilises a trio of charger blocks 39, 40, 44 (see Figures 3a and 3b) for ramping up the voltage to the required level. The charger block is illustrated in detail in Figure. 14. This is a DC to DC converter. It is essentially based on a switching mode power supply (SMPS) which boosts the input voltage and provides a pulsed signal to charge a storage element. An SMPS requires an oscillator to provide the pulsed signal. The rate of the pulse can vary depending on the application. Too low a frequency and the charging element will be charged excessively slowly. Too high a rate poses an excessive power drain to operate the circuit. The solution chosen is a crystal 32.768 KHz oscillator element X1 (Figure 14) as used in digital watches. This oscillator element X1 allows for low power consumption and compact size and high frequency accuracy. Furthermore, the oscillator frequency exceeds the audible frequency range of an MP3 player or mobile phone (20Hz to 20 KHz), thus preventing any interference. This will also prevent the transformer T1 (Fig. 14) from ringing emitting an audible sound which the user would hear and disturb their listening enjoyment or conversation on the mobile phone.

### Super-capacitor

The energy harvesting system 1 of the preferred embodiment of the present invention utilises a super-capacitor 23 for long-term energy storage, primarily as a reservoir that maintains electrical energy supply from the device to a coupled appliance during any inactive periods between periods of active movement of the headphones wearer. The super-capacitor, also known as electric double layer capacitor, is a special kind of capacitor which has an electrical storage capacity that is orders of magnitude greater than a standard capacitor for the same size envelope. For example, a normal capacitor value could be 1 Micro Farad (1 million times smaller than a Farad). A 2.5 Volt 10 Farad super-capacitor can be the same diameter and shorter length than an AAA 1.5v battery. The super-capacitor can store energy for hours or even days or months and has a fast charge time compared to batteries (seconds compared to hours for a battery). Furthermore the super-capacitor has a virtually Zero carbon footprint compared to batteries, with millions or more charge cycles compared to the 200 to 1000 for most commercially available rechargeable batteries. In a particularly preferred development the super-capacitor may even be used to replace the use of a battery - directly powering the USB-coupled appliance without need of any battery within the USB-coupled appliance.

### Zero Threshold Voltage MOSFETs

The energy harvesting system 1 of the preferred embodiment of the present invention utilises a number of Zero Threshold Voltage MOSFETs to perform key semiconductor functions of the system.

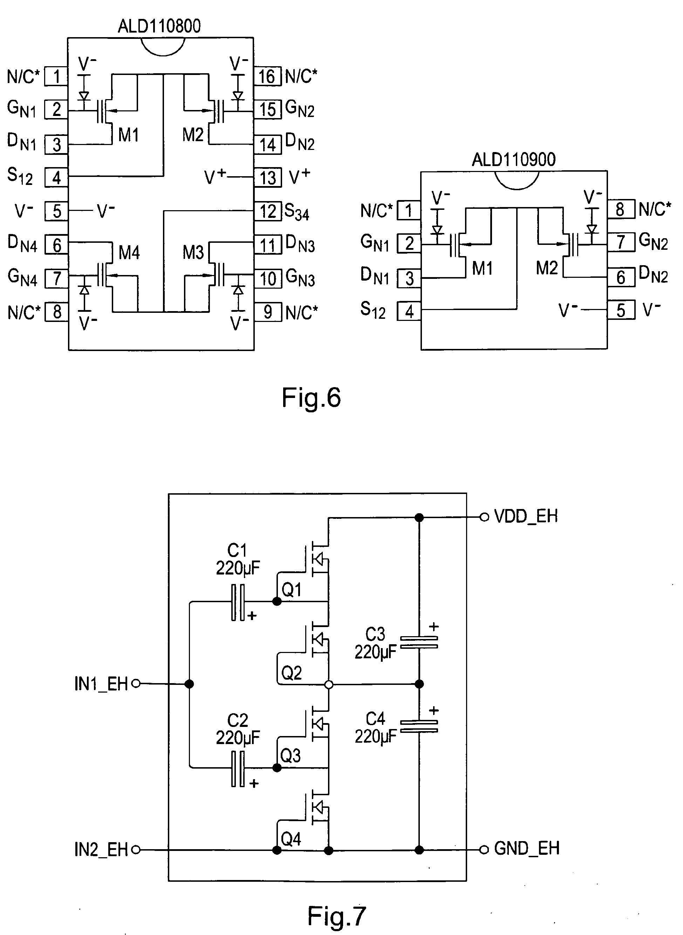

As is well known, electronic circuits contain semiconductor components such as transistors and diodes and these are available as individual discrete packaged form or in ICs (Integrated circuits) referred to as a microchips which contain thousands of these in a single package. A popular semiconductor material is silicon which most of these devices are made from. However, a silicon transistor requires a threshold voltage at the gate terminal of approximately 0.7 Volts. Silicon diodes have a 0.7 Volts drop across them. This is a minimum voltage for them to switch on. Some devices made from germanium can operate at 0.3 Volts. However, in an energy harvesting system where very small voltages may be collected over a time, an electronic circuit made of these components will not operate unless a significant external energy is applied. This is challenging for a system using human incidental movement as the source of energy. We have found a solution by utilising Zero Threshold Voltage MOSFETs. Suitable such components are supplied by Advanced Linear Devices Incorporated of 415 Tasman Drive Sunnyvale, California, 94089. These components are the ALD110800 and ALD110900 as shown in Fig. 6. These packages contain quad and dual packaged Zero Threshold Voltage N-Channel MOSFET devices. The electronic circuits for the preferred embodiment of this invention utilise a combination of the ALD110800 and ALD110900 configured as various devices such as a diode and circuit structures such as a voltage comparator which are described further later. We utilise Zero Threshold Voltage N-Channel MOSFETs to build pioneering circuit structures leading to notionally the world's lowest operating voltage and highly efficient energy harvesting and chargers/ DC to DC converter circuits.

A charger or DC to DC converter is a circuit which boosts Direct Current input to a greater Direct Current output. The circuit structure is generally a simple SMPS (Switch Mode Power Supply). As noted previously, there is a requirement that an output voltage of 5 Volts be provided to power a USB-coupled appliance such as an MP3 player or mobile phone. A prior art commercially available DC to DC converter IC that can boost voltages from as low as 0.3 Volts to 5 Volts DC, sold under package number tps61200, is available from Texas Instruments, Dallas, Texas 75265. However, it requires 0.3 Volts to start boosting the voltage. By contrast, the charger circuit of the present invention shown in Figure 14 can start operating from below 0.1 Volts and boost the input voltage through stages to the required 5 Volts. The energy harvesting system 1 utilises Zero Threshold MOSFETs at various stages to enable operation of the system, as a whole, at below 0.1 Volts. The further stages are described in more detail later.

A prior art energy harvesting module, number EH301A by Advanced Linear Devices Incorporated of 415 Tasman Drive Sunnyvale, California, 94089 utilising their Zero Threshold Voltage MOSFETs the ALD110800 and ALD110900 as shown in Fig. 6. is available. The EH301A energy harvesting module is a very advanced design and is a leader in its field. However, this does not contain a DC to DC converter to boost the input voltage and does not utilise a long term energy storage device such as a super-capacitor but rather uses a standard capacitor of 6800 Micro Farads. This module is suited for wireless sensor applications and can provide high instantaneous output voltage and current bursts depending on the input signal. However, it is unable to provide the constant 5 Volts and 0.1 Amp Direct Current to provide a power source or charge the battery within a USB- coupled appliance.

**Resonant frequency tuned transformer with High Permeability Core**

The transformer T1 within each of the three charger blocks 22, 24, 32 (Fig. 14) performs the task of storing energy momentarily and releasing it and multiplying the voltage. This transformer T1 can have a Ferrite core or advantageously has a high relative permeability core such as Nanocrystalline Soft Magnetic Materials. Using such core types means that there is higher inductance per turn than a ferrite core and hence more energy can be stored in it and a fewer number of windings are required relative to the inductance created, thus resulting in less DC resistance and therefore higher current. By high relative permeability we mean a relative permeability at least 10 times that of ferrite (640 relative permeability) and preferably greater than 100 times that of ferrite.

A typical high relative permeability toroid core such as the Nanoperm M-102 of Magnetec GmbH has a relative permeability of 90,000 compared to that of Ferrite which is typically 640. This is made from Nanocrystalline Alloy, a soft magnetic material. This means that windings on the toroid core can be reduced by a factor of 90000/640 or more than 100 times for the same inductance. This means that the DC resistance would also be reduced by more than 100 times. The primary turns p1, p2 of the transformer T1 form an inductor L. The principle of parallel LC resonance is deployed whereby a parallel resonance circuit is made by a capacitor C3 across the primary windings p1, p2. The inductor has electrical impedence which is a sum of DC resistance and AC reactance. At resonance, the inductor L will generate maximum power as the reactance will be removed and thus only resulting in the DC resistance of the windings. However, advantageously, using a high relative permeability core results in less windings required for the intended inductance and hence DC resistance is also reduced and therefore aiding more power efficiency. Also, as there are less windings required, advantageously there would be more space on the core material to wind thicker insulated wire to further reduce DC resistance. Alternatively, multiple strands of the existing wire may be used, connected in parallel to reduce the 'skin effect' at high frequencies due to increased surface area of the conducting wire.

The voltage magnitude is determined by the ratio between the primary p1, p2 and secondary windings s1, s2 of the transformer T1. More windings on the secondary s1, s2 will increase the voltage. For example if the secondary windings have twice the number of windings of the primary, the then voltage across the secondary s1, s2 would be doubled. The resonance frequency of the primary is determined by the equation (Eq.1.) below:

$$F = 1/(2\pi(\sqrt{LC})) \qquad\qquad\qquad (Eq.\ 1)$$

Therefore, a transformer is chosen with a primary inductance L, and a capacitor C3 which would result in a resonant frequency Fp of frequency 32768 Hz. A further use of resonance is made for the output of the transformer T1. This entails use of series LC resonance. Here an inductor L1 (Fig. 14) is connected in series with a capacitor C4 whose values are selected to give a frequency of 32768 Hz where L is replaced by L1 and C3 is replaced by C4 and applied to Eq.1.

Here the inductor L1 is also advantageously made using a core having a high relative permeability core to reduce DC resistance.

**System Overview**

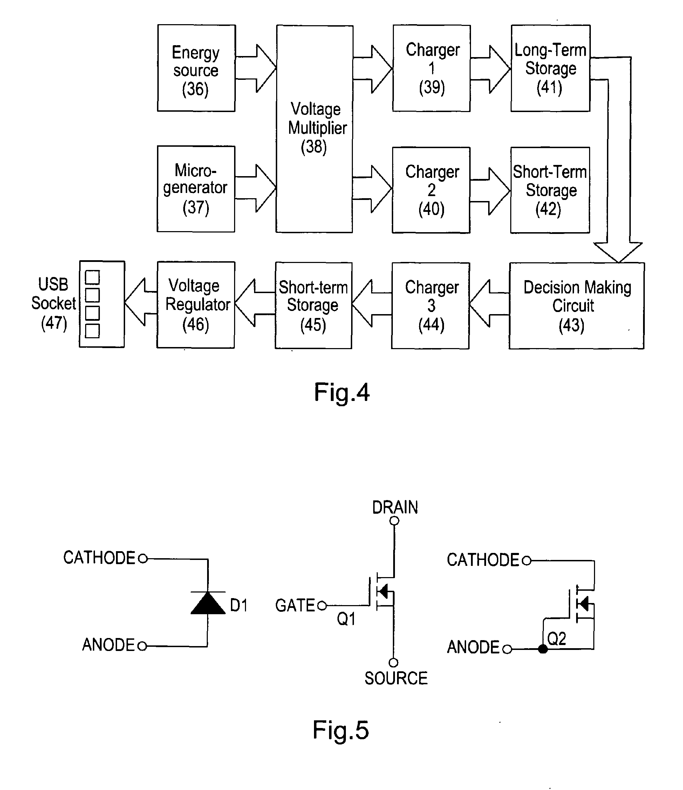

The top level system schematic is shown in Fig. 3. This shows connectivity of the sub-blocks Fig.4 through to Fig.14. The top level implementation schematic in Fig.3. is fairly straightforward and all connections of the sub-blocks and their terminal names are shown. The Figure 3 embodiment uses more than one of each of some of the building blocks for simplicity. The correlation of the sub-blocks to the number of instances of them in Fig.3 is shown in Table 1.

**Table 1. Sub-block instances in top level schematic in Fig. 3.**

| Item | Item Nos. | Sub-block Figure | Numbers of instances |
|---|---|---|---|
| Micro-generator | 20 | - | 1 |
| Voltage Multiplier | 21 | Fig. 7 | 1 |
| Charger | 22, 24, 32 | Fig. 14 | 3 |
| Super-capacitor | 23 | Fig.9 | 1 |
| Standard Capacitor | 25, 33 | Fig. 10 | 2 |
| Voltage Comparator | 26, 27 | Fig. 12 | 2 |
| Switch | 29,30,31 | Fig.12 | 3 |
| NOR gate | 28 | Fig. 8 | 1 |

(continued)

| Item | Item Nos. | Sub-block Figure | Numbers of instances |
|---|---|---|---|
| Voltage Regulator | 34 | Fig. 13 | 1 |

The preferred embodiment of the invention utilises the Zero Threshold Voltage N-Channel MOSFETS as shown in Figure 6 for all transistors and diodes in the electronic circuits. Where a diode is required, this is built using an implementation of the Zero Threshold Voltage N-channel device as shown in Figure 5. Figure 5 shows a standard diode D1, an N-Channel MOSFET Q1 and the implementation of the diode Q2 using Q1. This implementation of the diode Q2 in Figure 5 is used in the sub-blocks of Figure 7, the voltage multiplier Q1, Q2, Q3, Q4 and the charger Q11 blocks in Figure 14.

Circuit operation is such that AC (Alternating Current) is generated by the micro-generators 20. This is passed through a voltage multiplier 21 which amplifies the voltage by a factor of four and generates a DC voltage output. This then passes into two identical chargers 22, 24. Both chargers 22, 24 generate a higher voltage output signal in pulsed form. Charger 22 is terminated to a super-capacitor 23 which is used as a buffer to store energy long term for when there is no energy source present for the micro-generator to capture. Charger 24 is terminated to a standard capacitor 25 which maintains smooth DC current and stores the energy temporarily. If there is energy available for the micro-generator to capture, the standard capacitor 25 voltage will be higher than that of the super-capacitor 23.

There are two voltage comparators 26, 27. Voltage comparator 26 outputs a high signal if the voltage of super-capacitor 2) is higher than standard capacitor 25. Voltage comparator 27 outputs a high signal if the voltage of standard capacitor 25 is higher than super-capacitor 23. Because the capacitance of the super-capacitor 23 is significantly larger than the standard capacitor 25 it takes longer to charge. It also can store the energy for longer. The voltage comparators 26 and 27 therefore effectively serve the purpose of energy detection devices. If there is energy available for the micro-generator to capture, the contents of the standard capacitor 23 is passed to the output charger 32 via the switch 30. Because there is constant energy for the micro-generator to capture, the standard capacitor 25 is continuously charged until there is no more energy available for the micro-generator to capture (such as nightfall for a solar cell).

When there is no energy for the micro-generator to capture, the voltage of the standard capacitor 25 gets lower than the super-capacitor 23 and hence the output is selected by switch 29 to pass the contents of the super-capacitor 23 to the output charger 32. If the there is no energy for the micro-generator to capture and the contents of both super-capacitor 23 and standard capacitor 25 is zero, both voltage comparators 26, 27 will output a zero. This would also be the case if both the super-capacitor 23 and standard capacitor 25 voltages were equal. In this case, there is energy available for the micro-generator to capture and the super-capacitor 23 has been charged a little. Here we want to take advantage of the energy available for the micro-generator to capture to charge the USB-coupled appliance rather than from the super-capacitor 23 which is used as a backup storage when there is no energy for the micro-generator to capture. In these two cases a NOR gate 28 will output a high. However, the circuit would not operate if there was not voltage at its power supply VDD_NOR and GND_NOR. In this case, the output of the standard capacitor 25 is used to power it. The output is connected to switch 31 which gates the contents from the standard capacitor 25 to be transferred to the output charger 32. Output charger 32 provides further boosting and charges the standard capacitor 33 which provides a smooth high voltage DC greater than 5v to drive the voltage regulator 34 which stabilises the output to the USB socket 35 to 5v, 100mA DC.

**Micro-generator**

**Figures 2a-2d** show typical energy harvesting micro-generators (but non-exhaustive). **Figure 2a** being a kinetic energy micro-generator using electromagnetic induction (AC source), **Figure 2b** being a piezo-electric element for a vibrational energy (AC source), **Figure 2c** being a solar cell (DC source) and **Figure 2d** being a thermoelectric generator (DC source). These are only a sub-set of the available micro-generators or that are possible in future to harness ambient or scavenged energy. The present invention is designed to work with any presently available and future ones utilising other discovered ambient or scavenged energy sources which are captured using an AC or DC micro-generator.

**Voltage Multiplier**

The voltage multiplier, Figure 7, has two functions, multiplying the voltage from the input (AC) Alternating Current provided by the micro-generator in Figure 4 by a factor of four and outputting it in DC (Direct Current) form. The key advantage of this circuit is that it utilises the Zero Threshold Voltage MOSFETs of Figure 6 by configuring them as a diode as shown in Figure 5. (Q2). Conventional diodes D1 (Fig. 5) come in silicon or germanium form and have a voltage drop of 0.7 Volts and 0.3 Volts respectively.

The implementation in Figure 7 with Q1, Q2, Q3 and Q4 ensures zero voltage drop. This means that there is no loss of signal from the micro-generator and hence maximum voltage multiplication can be ensured. Conventional voltage multipliers also have cascaded stages to multiply the voltage. Here, the multiplication factor of the input voltage is diminished the more stages there are. Hence the implementation in Figure 7 utilises paralleling stages as much as possible.

**Charger**

The charger block in the invention as shown in Fig. 14 is implemented using Zero Threshold Voltage MOSFETs (Fig. 6) and is essentially a DC to DC converter. This is based on a switching mode power supply (SMPS) which boosts the input voltage and provides a pulsed signal to charge a storage element. A SMPS requires an oscillator to provide the pulsed signal. This is provided by a Pierce Gate oscillator circuit. This consists of a 32.768KHz crystal X1 used in digital watches such as the CFS308 by Citizen America of 363 Van Ness Way, Suite 404 Torrance, CA 90501 USA. The 32.768KHz frequency of the oscillator (Fo) is set by the resistor R2 and capacitor C2 which is given by Eq. 2:

$$F_o = 1/(2\pi(R2C2)) \qquad\qquad (Eq.\ 2)$$

The Pierce Gate Oscillator uses an inverter to provide a feedback loop via resistor R1. The inverter is implemented using N-channel transistor Q1 and resistor R3. Capacitor C1 is equal to C2 for use as a Pierce gate Oscillator. The output is then inverted again through the inverter implemented by N-channel transistor Q1 and resistor R4 which provides a buffered output pulsed signal. This drives two banks of parallel transistors. Each bank provides an amplified pulsed signal to the primary side of the transformer T1. Parallel transistors are used to provide greater power drive capability. Here, transistors Q3, Q4, Q5 and Q6 drive one end of the primary windings p1, while transistors Q7, Q8, Q9 and Q10 drive the other end of the primary windings p2 of the transformer T1.

The transformer T1 performs the task of storing energy momentarily and releasing it and multiplying the voltage. This transformer T1 can have a Ferrite core or advantageously has a high relative permeability core such as Nanocrystalline Soft Magnetic Materials. Using such core types means that there is higher inductance per turn than a ferrite core and hence more energy can be stored in it and a fewer number of windings are required relative to the inductance created, thus resulting in less DC resistance and therefore higher current. A typical high relative permeability toroid core such as the Nanoperm M-102 of Magnetec GmbH has a relative permeability of 90,000 compared to that of Ferrite which is typically 640. This is made from Nanocrystalline Alloy, a soft magnetic material. This means that the DC resistance would also be reduced by more than 100 times. The primary turns p1, p2 of the transformer T1 form an inductor L.

The primary turns p1, p2 of the transformer T1 form an inductor L. The principle of parallel LC resonance is deployed whereby a parallel resonance circuit is made by a capacitor C3 across the primary windings p1, p2. At resonance, the inductor L will generate maximum power as the reactance will be removed and thus only resulting in the DC resistance of the windings. However, advantageously, using a high relative permeability core results in less windings required for the intended inductance and hence DC resistance is also reduced and therefore aiding more power efficiency. The voltage magnitude is determined by the ratio between the primary p1, p2 and secondary windings s1, s2 of the transformer T1. More windings on the secondary s1, s2 will increase the voltage. For example if the secondary windings have twice the number of windings of the primary, the then voltage across the secondary s1, s2 would be doubled. The resonance frequency of the primary is determined by the equation (Eq.1.) below:

$$F_p = 1/(2\pi(\sqrt{LC})) \qquad\qquad (Eq.\ 1)$$

Therefore, a transformer is chosen with a primary inductance L, and a capacitor C3 which would result in a resonant frequency Fp of frequency 32768 Hz.

Further use of resonance is also made for the output of the transformer T1. This is deployed by the use of series LC resonance. Here an inductor L1 is connected in series with capacitor C4 whose values are selected to give a frequency of 32768 Hz where L is replaced by L1 and C3 is replaced by C4 and applied to Eq.1.

Here the inductor L1 is also advantageously made using a core having a high relative permeability core to reduce DC resistance.

A diode prevents any energy from being driven back from the storage element being charged by the output pin (VOUT_CH).

### Storage Elements

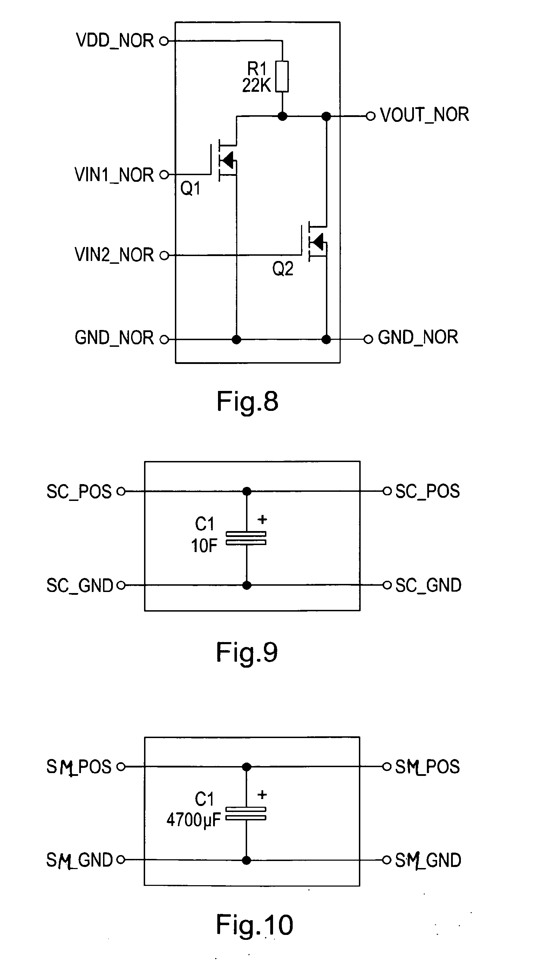

The super-capacitor in Figure 9 and standard capacitor in Figure 10 are electrical energy storage elements. The super-capacitor is used as a buffer to store energy long term when the user is not moving. The standard capacitor maintains smooth DC current and stores the energy temporarily when the user is moving. These storage elements are charged by the charger block of Figure 14.

### Voltage Comparator

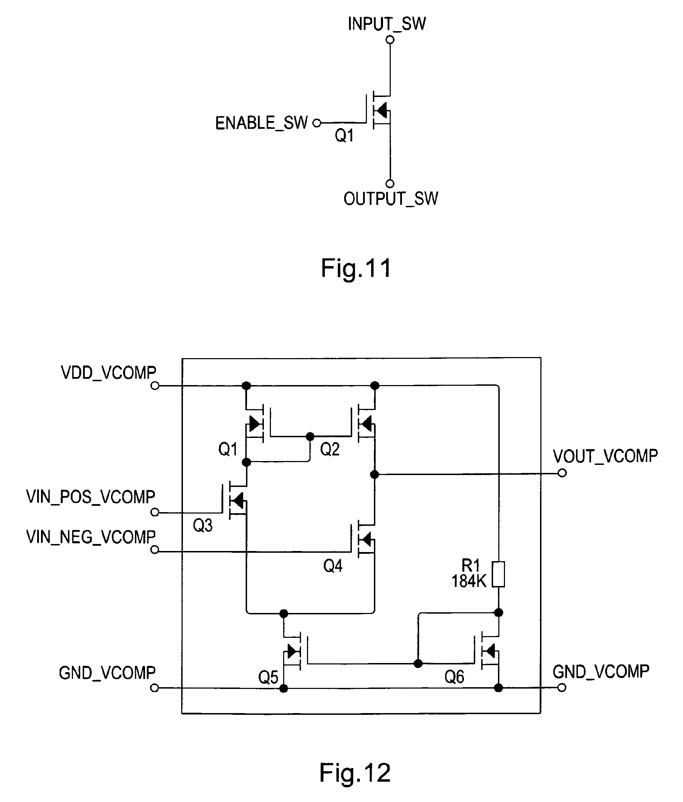

The voltage comparator shown in Figure 12 performs the decision making function. Off the shelf devices are available but do not have the very low voltage capability of the implementation in this invention. Therefore a discrete one is implemented using the Zero Threshold Voltage N-Channel devices in Figure 6. The voltage comparator performs the following functions as described in Eq. 3.

$$\text{VCOMP\_OUT} = (\text{VPOS\_VCOMP} - \text{VNEG\_VCOMP})A \qquad \text{(Eq. 3)}$$

Where VPOS_VCOMP is the non-inverting input, VNEG_VCOMP is the inverting input and A is the open loop gain. Essentially the voltage comparator compares the input voltage levels and multiplies them by a magnitude 'A'. Depending on the inputs voltage levels, the output signal can swing between VDD_VCOMP and GND_VCOMP. Where VDD_VCOMP is depicted as 'high' and GND_VCOMP is depicted as 'low'.

### Switches

The main operating switch is shown in Figure 11. This forms part of the decision making circuit. It is implemented as a standard N-Chanel MOSFET switch using the devices in Figure 6. When a high signal is provided (voltage greater than 0 Volts) at the gate, it will allow any current from the input (terminated to the Drain of the transistor) to flow to the output (terminated to the source of the transistor).

### NOR gate

The NOR gate implementation is shown in Figure 8. This forms part of the decision making circuits. It consists of a standard N-channel implementation using the devices in Figure 6. It has two inputs. It will output a low (0 volts) in all cases except when both inputs are low (0 volts) when it will output a high (+ volts) equal to the VDD_NOR rail.

### Voltage Regulator

The purpose of the voltage regulator 6, 34, 36, shown in detail in Figure 13, is to ensure a smooth 5 Volts, 0.1 Amps output to the USB socket, Fig. 3, (35). The key component is the voltage regulator device,VR1 which is essentially a low dropout regulator (LDO). A specially selected one is used (LP2950 as available from Micrel, Inc. 2180 Fortune Drive San Jose, CA 95131 USA). This has a 0.380 Volt dropout voltage at 0.1 Amps output. This means that an input voltage of no more than 5.38V is required to provide the required constant 5 Volts, 0.1 Amps for the USB device. The capacitors C1, C2 in Figure 13 remove ripples in the input and output respectively and help prevent a voltage drop due to long wires or tracks in the PCB.

### USB Socket

The USB socket 7 as shown in Figure 1 is a Type A format. The connectivity 35 is shown in Figure 3. It has four pins. Pin 1 is terminated to the 5 Volt output (VOUT_VREG) and Pin 4 is terminated to the GND (GND_VREG) output of the voltage regulator 34 in Figure 3a.

### System operation

Figure 3b provides a flow chart of system operation. The energy is collected 36 by way of the micro-generators 37 which can either generate Alternating Current (AC) or Direct Current (DC) depending on the type, e.g. electromagnetic Induction (AC), Solar cell (DC) or Thermo Electric Generator (DC). This is then boosted by the voltage multiplier (38) and converted to Direct Current (DC). This is then delivered to parallel chargers 39, 40 which each charge a storage element. One charger 39 charges a long term storage element - super-capacitor 41 and the other charger 40 charges a short term storage element - standard capacitor 42.

The voltage of the super-capacitor 41 is then compared with the voltage of the standard capacitor 42 by the voltage comparator/ decision making circuit 43 which thereby determines if there is energy for the micro-generator to capture. If this is the case, the voltage of the short term storage element 42 will be higher than that of the long term storage element 41. This is because the long term storage element 41 takes longer to charge due to its large capacitance. If there is energy for the micro-generator to capture, then the path of the standard capacitor 42 will be selected to charge the mobile phone or MP3 player as it will be continually charged. If there is no energy for the micro-generator to capture (such as at nightfall for a solar cell or when the user ceases to move as for a kinetic energy harvester), then the contents of the super-capacitor 42 will be selected to charge the mobile phone or MP3 player.

The third charger 44 provides additional voltage boosting and a pulsed signal to charge the second standard capacitor 45 which will provide a relatively smooth DC voltage which is then further regulated by the voltage regulator 46 to provide the required quality of 5 Volt, 0.1 Amp Direct Current.

If the voltages of both the standard capacitor 42 and the super-capacitor 41 are the same, then the path from the standard capacitor 42 will be used since there is energy available for the micro-generator to capture and the stored energy in the super-capacitor 41 can be used later when there is no more ambient energy available for the micro-generator to capture.

The power cable 8 that is coupled to the output of the voltage regulator 34 via the USB type A plug may be terminated on the other side with a USB type A plug, a micro USB type A plug, a USB type B plug or an IPod plug. The latter plug may be plugged into a portable USB appliance such as a stand-alone MP3 player (e.g. Apple iPod) or a mobile phone (e.g. such as Apple iPhone, iPhone 3G). The device/ energy harvesting system 1 thus provides a DC power source to directly power the appliance or charge a battery within the appliance.

The various aspects of the present invention provide numerous innovations and benefits including: - use of portable low power technology such as the digital watch crystal; low voltage operation for all circuits including voltage comparator and decision making circuits and voltage multiplier and charger circuits (<0.3v) preferably by use of Zero Threshold MOSFETs; - innovative use of sensing to detect if energy is available for the micro-generator to capture by way of a voltage comparator and decision making circuits; - use of a super-capacitor to store energy longer term which can be used to power or charge the connected mobile phone or MP3 player when there is no more available energy to harvest (such as at nightfall for a solar cell or when the user ceases to move as for a kinetic energy harvester),; - low loss circuit design; Zero Threshold MOSFETs configured as diodes for optimised voltage multiplier and charger circuits; - resonance optimised induction and high permeability core soft magnetic materials in charger circuit for optimum power; compact, lightweight off-the-shelf electronic components; zero carbon emissions; - no batteries with USB connected device powered directly by the system of the invention.

The new technology further includes: - the power processing system is able to better amplify the signal generated by the micro-generator source to provide electrical energy for a larger capacity and voltage and improved user friendliness by way of enhanced decision making circuits; - the super-capacitor with its higher capacitance and voltage capability for its size and mass provides sufficient power to the load for an increased duration of time than heretofore possible; - the voltage regulator provides lower dropout voltage and therefore provides more efficient voltage regulation by way of less energy wastage.

Although the present invention has been described with reference to the preferred embodiments thereof, it will be understood that the invention is not limited to the details thereof. Various substitutions and modifications may occur to those of ordinary skill in art. Therefore, all such substitutions and modifications are intended to be embraced within the scope of the invention as defined in the claims.

While the above-described embodiments of the invention serves as a means for providing external electrical power to power portable electronic devices such as mobile phones and MP3 players or to charge batteries within such devices, the inventive improvements in the energy harvesting and management technology herein are applicable to other instruments, devices, processes and structures in which electrical power is required. As a non-exhaustive list of examples, the technology can be used in appliances such as remote controllers, mobile phones, MP3 players, games controllers such as Nintendo Wii[R], laptops, netbooks, PDAs, digital cameras, portable musical instruments containing electronic circuits such as keyboards and electric guitars, or wireless portable devices such as Bluetooth[R] headphones, microphones and mice.

In particularly preferred embodiments the energy harvesting device is housed in or on a garment or device that is adapted to be worn by a user. In one preferred embodiment the device is housed in or on a pair of headphones. In another preferred embodiment the energy harvesting device is housed in or on an arm band. Here the arm band suitably has a sleeve or pocket for holding a mobile phone or mp3 player. A thermoelectric generator may be incorporated in the arm band to convert the heat from the user's body heat to electricity. Presently a thermoelectric generator sized to fit in the arm band (typically 40 mm X 40 mm by 3 mm) would only generate about 0.1 Volt from the users body heat.

However, using the proposed invention, it is possible to utilise this to generate enough power to directly power or charge the battery within an MP3 player or mobile phone. This is because energy our harvesting system uses Zero Threshold Voltage Transistors to remove dependence on minimum supply voltage for electrical circuit operation.

The preferred thermoelectric generators have a very low resistance, about 1 Ohm - which would equate to 0.1 Amps at 0.1 Volt, which is sufficient to allow the highly efficient energy harvesting system to build up the required voltage and current to directly power or charge the battery within an MP3 player or mobile phone, PDA or digital camera. Suitable thermoelectric generators can be readily sourced as peltier cooler modules such as are normally supplied for powering to cool computers but which can be used in reverse as generators.

If the energy harvesting device is housed within an MP3 player or mobile phone or the like rather than on a band, when using a thermoelectric generator as the micro-generator the electrical energy could be drawn from the user's body heat while the device is held in the user's pocket or when held in their hand. Here the same sized thermoelectric generator may be used as in the arm band (typically a 40 mm x 40 mm x 4 mm generator).

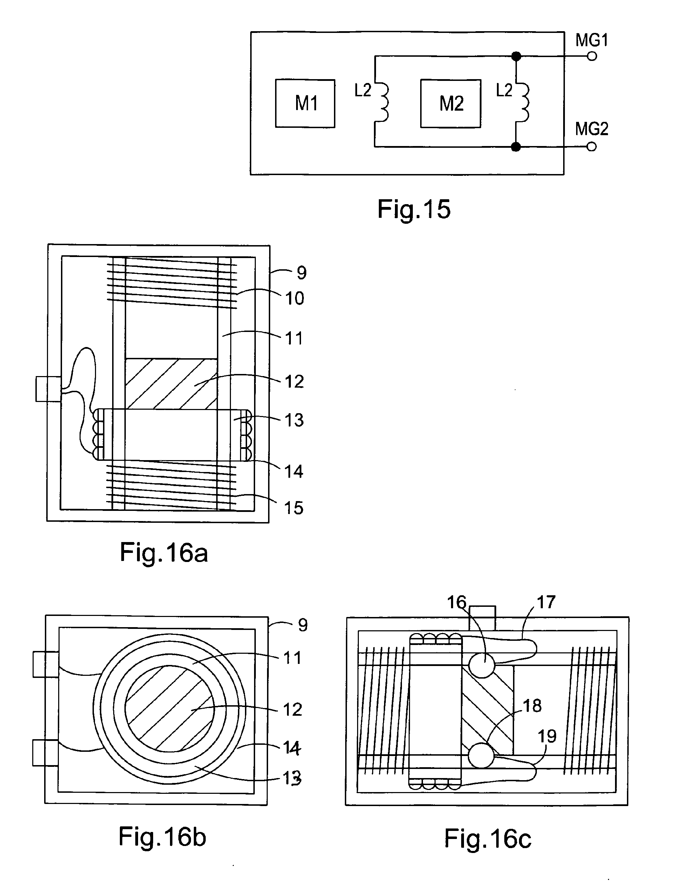

Referring to Figures 15 and 16, an example of a preferred form of kinetic energy harvesting micro-generator suitable for use in a pair of headphones is shown. This may have a pair of micro-generators 2, 3 each comprising a coil L1, L2 and corresponding magnet M1, M2. Each micro-generator 2, 3 is suitably mounted in a respective one of the left and right headphone earpieces. The mechanical arrangement of the micro-generator 2, 3 is shown in Figures 16a- 16c.

Fig. 16a shows a vertical side view of the micro-generator 2, 3 comprising non-electrically conducting and non-magnetising structural components.

These comprise: a housing 9, a first tube 11 with both ends attached to the housing 9 and a second shorter tube 13 which can freely move around the first tube 11 vertically. An electrical coil of enamelled copper or aluminium wire 14 is wound and secured around the short tube 13. A first coil spring 15 is attached to the bottom of the housing 9 and a second coil spring 10 is attached to the top of the housing 9. A magnet 12 is secured permanently stationary within the first tube 11.

Fig. 16b shows the micro-generator 2, 3 from above, showing the two coil springs 10, 15 encompassing the first tube 11. Fig.16c shows a front/ horizontal view of the micro-generator 2, 3 showing electrical connections 17, 19 comprising electrically insulated flexible copper braiding to allow the electrical coil of enamelled copper wire 14 secured around the second short tube 13 to move with it smoothly around the first tube 11. The electrical connections 17, 19 are terminated to respective electrical connectors 16, 18.

In the elevation in Fig.16a, during external vertical force, the electrical coil 14 bounces on spring 15 and moves around the the magnet 12 cutting the magnetic flux and causing electrical energy to be generated. Further vertical force will cause the electrical coil 14 to move past the top of the magnet 12 and hit the second spring 10 and cause the coil 14 to return and hit the first spring 10 which in turn causes the coil 14 to oscillate between the first and second springs 10, 15 resulting in greater movement and thus greater electrical energy. The process is the same if a horizontal force is applied for the microgenerator 3 that is horizontally oriented as shown in Fig. 16c. The two micro-generators 2, 3 shown in Figure 15 thus generate electrical energy from the kinetic energy of incidental human movement by means of electromagnetic induction.

The kinetic energy-harvesting micro-generators 2, 3 may be mounted with one in each of a headphone's earpieces. Unlike other electromagnetic induction micro-generators, the coil of the micro-generator 2, 3 moves rather than the magnet. Since magnets are heavy and have substantial inertia they require significant movement force to generate electricity. However, by configuring the coil to move around the magnet substantial relative movement can be achieved generating electrical energy with even the slightest force. A further important advantage of re-configuring the micro-generator this way is the that the noise generated by the movement of the coil is virtually inaudible compared to noise from movement of a moving magnet, therefore resulting in much less impact on the headphone wearer's enjoyment whilst listening to an audio source.

In the Figures 15 and 16 kinetic energy harvesting embodiment the voltage comparators 26 and 27 of its decision making circuit effectively serve the role of movement detection devices. If the user is moving the contents of the standard capacitor 23 is passed to the output charger 32 via the switch 30. Because the user is moving, the standard capacitor 25 is continuously charged until the user stops moving. When the user stops moving, the voltage of the standard capacitor 25 gets lower than the super-capacitor 23 and hence the output is selected by switch 29 to pass the contents of the super-capacitor 23 to the output charger 32.

**Claims**

1.  A portable energy harvesting device to harness ambient energy such as, for example, heat or sunlight, RF or kinetic energy from movement of the carrier and to convert it to electrical energy to charge or directly power a portable electrical appliance wherein the device comprises a super-capacitor as a long term electrical energy storage means and a power processing circuit comprising one or more Zero threshold voltage transistors to remove dependence on minimum supply voltage for electrical circuit operation.

2. A portable device as claimed in claim 1 wherein the device stores electrical energy long-term while charging or directly powering a portable electrical appliance, the device having a decision making processor or decision making circuit that determines if there is available energy for the micro-generator to capture and, if not, selects the long-term stored electrical energy to charge or directly power the electrical appliance.

3. A portable device to harness ambient energy such as, for example, heat or sunlight, RF or kinetic energy from movement of the carrier and to convert it to electrical energy to charge or directly power a portable electrical appliance wherein the device stores electrical energy long-term while charging or directly powering an electrical appliance, the device having a processor or decision making processor or decision making circuit that determines if there is available energy for the micro-generator to capture and, if not, selects the long-term stored electrical energy to charge or directly power the electrical appliance.

4. A portable device as claimed in claim 1, 2 or 3 wherein the device has a charger circuit that comprises an oscillator and a resonance frequency tuned transformer.

5. A portable device as claimed in claim 4, wherein the oscillator is a digital watch crystal.

6. A portable device as claimed in claim 4 or 5, wherein the resonance frequency tuned transformer core is made from a high relative permeability soft magnetic material or the resonance frequency tuned transformer is in a circuit that contains one or more inductors whose core material is made from a high relative permeability soft magnetic material.

7. A portable device as claimed in any preceding claim, wherein the device comprises a power outlet port to power an external portable electrical appliance the power outlet port being a USB socket.

8. A portable device as claimed in any preceding claim, wherein the device comprises: a micro-generator; a power processing system; a short term energy storage means; and a long-term energy storage means, wherein the power processing system comprises a first charger to charge the short term energy storage means and a second charger to charge the long-term energy storage means and a comparator or decision making circuit that compares the output of the short term energy storage means with the output of the long-term energy storage means.

9. A portable device as claimed in claim 8, wherein the device further comprises a third charger linked to the output of the short term energy storage means and/ or long-term energy storage means to boost the output thereof.

10. A portable device as claimed in claim 8 or 9, wherein the power processing system comprises at least one Zero Threshold Voltage N-Channel MOSFET transistor.

11. A portable device as claimed in claim 8, 9 or 10, wherein the device has a voltage multiplier that comprises diodes implemented using one or more Zero Threshold Voltage N-Channel MOSFET transistors.

12. A portable device as claimed in any preceding claim, wherein the device is housed in or on a garment or device that is adapted to be worn by a user.

13. A portable device as claimed in claim 12, wherein the device is housed in or on a pair of headphones or in/on an arm band.

14. A portable device as claimed in any preceding claim, wherein the device has a micro-generator that harvests kinetic energy from movement of a person carrying or wearing the device.

15. A portable device as claimed in any preceding claim, wherein the device has a micro-generator that is a thermoelectric generator that harvests thermal energy and the device is adapted to harvest thermal energy from the body of a person carrying or wearing the device.

3. Micro-generator

4. Power Processing

5. Storage Device

6. Voltage Regulator

7. USB Type 'A' Socket

8. USB Lead

2. Energy source

1. Energy harvesting system

Fig.1

Fig.2a

Fig.2b

Fig.2c

Fig.2d

Fig.2

Fig.3

| Energy source (36) | → | Voltage Multiplier (38) | → | Charger 1 (39) | → | Long-Term Storage (41) |
| Micro-generator (37) | → | | → | Charger 2 (40) | → | Short-Term Storage (42) |

| USB Socket (47) | ← | Voltage Regulator (46) | ← | Short-term Storage (45) | ← | Charger 3 (44) | ← | Decision Making Circuit (43) |

## Fig.4

CATHODE○ ▼D1 ANODE○

DRAIN○ GATE○ Q1 SOURCE○

CATHODE○ ANODE○ Q2

## Fig.5

## ALD110800

## ALD110900

## Fig.6

## Fig.7

Fig.8

Fig.9

Fig.10

INPUT_SW

ENABLE_SW o

Q1

OUTPUT_SW

## Fig.11

VDD_VCOMP

Q1    Q2

VOUT_VCOMP

VIN_POS_VCOMP

Q3

VIN_NEG_VCOMP

Q4

R1
184K

GND_VCOMP

Q5    Q6    GND_VCOMP

## Fig.12

Fig.13

Fig.14

Fig.15

Fig.16a

Fig.16b

Fig.16c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008109153 A

- GB 2447086 A